(19) Europäisches Patentamt / European Patent Office / Office européen des brevets

(11) **EP 2 082 295 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(21) Anmeldenummer: **07819365.3**

(22) Anmeldetag: **26.10.2007**

(51) Int Cl.:
*G05B 19/042* (2006.01)  *G05B 19/05* (2006.01)
*G05B 19/406* (2006.01)  *G05B 19/418* (2006.01)
*G05B 23/02* (2006.01)  *G05B 9/02* (2006.01)
*G06F 11/34* (2006.01)  *G08B 31/00* (2006.01)
*H02B 13/035* (2006.01)

(86) Internationale Anmeldenummer:
**PCT/EP2007/009320**

(87) Internationale Veröffentlichungsnummer:
**WO 2008/052711 (08.05.2008 Gazette 2008/19)**

(54) **VERFAHREN ZUR VORAUSSCHAUENDEN ERMITTLUNG EINER PROZESSGRÖSSE**

METHOD FOR PREDICTIVE DETERMINATION OF A PROCESS VARIABLE

PROCÉDÉ DE DÉTERMINATION PRÉDICTIVE D'UNE GRANDEUR DE PROCESSUS

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **28.10.2006 DE 102006050938**

(43) Veröffentlichungstag der Anmeldung:
**29.07.2009 Patentblatt 2009/31**

(73) Patentinhaber: **ABB Technology AG**
**8050 Zürich (CH)**

(72) Erfinder:
• **HEINEMANN, Lothar**
 **69493 Hirschberg (DE)**
• **GLOCK, Jürgen**
 **69493 Hirschberg (DE)**

(74) Vertreter: **Partner, Lothar**
 **ABB AG**
 **GF-IP**
 **Wallstadter Strasse 59**
 **68526 Ladenburg (DE)**

(56) Entgegenhaltungen:
**EP-A- 1 542 108      WO-A-98/55904**
**DE-A1- 4 447 288      GB-A- 2 290 872**
**US-A- 4 215 412      US-A1- 2002 077 792**
**US-A1- 2003 065 409      US-B1- 7 052 472**

**Beschreibung**

Die Erfindung betrifft ein Verfahren zur vorausschauenden Ermittlung einer Prozessgröße gemäß dem Oberbegriff des Anspruchs 1. Insbesondere ist das Verfahren zur Überwachung des Drucks eines Isoliergases in einer gasisolierten Schaltanlage einsetzbar.

Eine Messung von Prozessgrößen ist grundsätzlich fehlerbehaftet. Dem Messsignal sind üblicherweise Störgrößen überlagert, die systematisch oder stochastisch auftreten, die das eigentliche Messsignal nachteilig beeinflussen und die oftmals mathematisch nicht erfasst werden können. Während systematische Störgrößen und die daraus resultierenden Messfehler oft durch geeignete Maßnahmen im Signalflussplan kompensierbar sind, sind stochastische Störgrößen und deren Auswirkungen weniger gut beherrschbar.

Schwierig gestaltet sich auch eine vorausschauende Ermittlung von Prozessgrößen, wenn ein verhältnismäßig langer Zeitraum von beispielsweise 30 Jahren zu betrachten ist und hierfür verhältnismäßig viele Messwerte, welche annähernd kontinuierlich oder in verhältnismäßig kurzen Abständen, beispielsweise ein Messwert pro Minute, auszuwerten sind. Zur vorausschauenden Ermittlung müssen die Messdaten in einem funktionalen Zusammenhang überführt werden. Hierzu existieren verschiedene mathematische Verfahren, die in der Literatur beschrieben sind. Das Verfahren muss dann in der Lage sein, langfristige Änderungen genauso wie kurzfristige Änderungen erkennen und bewerten zu können.

Ein derartiger Fall liegt beispielsweise bei der Gasdichteüberwachung in SF6-Gas isolierten Hochspannungsschaltanlagen vor. Solche gasisolierten Schaltanlagen weisen eine technisch bedingte Leckrate auf, die sich durch einen Druckverlust bemerkbar macht und die üblicherweise geringer als 0.5% pro Jahr bezogen auf den Sollgasfülldruck bei Inbetriebnahme der Schaltanlage ist. In Falle eines technischen Defekt, beispielsweise einer porösen Dichtung, kann die Leckrate jedoch höher sein.

Die aufgenommenen Messwerte für den Gasdruck sind mit Messfehlern behaftet. Insbesondere ist die Temperatur des Isoliergases eine Quelle für solche Messfehler. Diese Temperatur ist dabei von der Umgebungstemperatur abhängig, welche tageszeitlich und jahreszeitlich schwankt, sowie vom Stromfluss und der dadurch erzeugten Verlustwärme in dem zu überwachenden Gasraum. Eine Erfassung der Gastemperatur zur rechnerischen Korrektur oder Kompensation der Messfehler gestaltet sich ebenfalls als schwierig, insbesondere bedingt durch die inhomogene Temperaturverteilung innerhalb eines Gasraumes.

Eine vorausschauende Ermittlung der kontinuierliche gemessenen Prozessgröße, nämlich des Drucks des Isoliergases, muss also sowohl vergleichsweise langsam veränderliche als auch vergleichsweise schnell veränderliche Veränderungen des Gasdrucks erkennen und analysieren können. Eine rein mathematische Approximation aller aufgenommenen Messwerte für den Gasdruck durch eine mathematische Approximationsfunktion ist zu aufwendig, insbesondere wäre eine verhältnismäßig hohe Rechenleistung hierzu nötig.

In der WO 98/55904 A ist eine Vorrichtung und ein Verfahren zur Vorhersage eines Fehlerzustandes ansprechend auf den Trend eines Maschinenparameters beschrieben, wobei aus dem Maschinenparameter ein Datentrend erzeugt wird sowie die Dauer und Steigung des Trends zur Voraussage einer Zeitperiode berechnet wird, an dem der Trend ein Warnniveau überschreitet.

In der US 2002/077792 A1 ist ein Verfahren zur Vorhersage von Prozessgrößen in einem e-Service Management System beschrieben, wobei das Verfahren die Aufnahme von Messwerten einer Prozessgröße und deren Diskretisierung umfasst, der zukünftige zeitliche Verlauf der Prozessgröße abgeschätzt und ein Zeitpunkt berechnet wird, zu dem die Prozessgröße einen Grenzwert erreicht.

Der Erfindung liegt die Aufgabe zugrunde, ein Verfahren anzugeben, welches gestattet, mit verhältnismäßig geringem Aufwand eine hinreichend genaue vorausschauende Ermittlung einer Prozessgröße in einer technischen Anlage durchzuführen.

Diese Aufgabe wird erfindungsgemäß durch ein Verfahren mit den im Anspruch 1 genannten Merkmalen gelöst.

Erfindungsgemäß wird vorgesehen, dass zunächst zu vorgebbaren Zeitpunkten Messwerte für die Prozessgröße aufgenommen werden. Anschließend werden zeitlich aufeinander folgende aufgenommene Messwerte zu einem gewichteten Messwert zusammengefasst und jedem gewichteten Messwert wird ein diskreter Messwert zugeordnet. Mittels einer Regression der diskreten Messwerte wird der zukünftige zeitliche Verlauf der Prozessgröße abgeschätzt und es wird ein Zeitpunkt berechnet, an welchem die Prozessgröße einen vorgebbaren Grenzwert erreicht.

Somit ist die Anzahl der zu verarbeitenden Messwerte reduziert und der Prozessgröße überlagerte Störgrößen sind kompensiert. Eine solche Abschätzung ist mit verhältnismäßig geringer Rechenleistung durchführbar und gestattet eine verhältnismäßig genaue Prognose des Verlaufs der Prozessgröße.

Eine bevorzugte Form der Regression ist die lineare Regression. Eine lineare Regression, das heißt, eine Approximation der Messwerte durch eine Gerade, ist verhältnismäßig einfach durchführbar liefert ausreichend genaue Ergebnisse

Das Verfahren ist insbesondere in gasisolierten Schaltanlagen anwendbar, wobei die Prozessgröße der Druck eines Isoliergases in einem Gasraum der Schaltanlage ist. Wenn der Druck des Isoliergases auf einen vorgegebenen Blockierdruck gefallen ist, so ist die Schaltanlage nicht weiter funktionsfähig, das heißt, weitere Schalthandlungen können nicht durchgeführt werden.

Das Verfahren gestattet in diesem Fall die Berechnung des Zeitpunktes, zu welchem der Druck des Isoliergases den vorgegebenen Blockierdruck erreicht. Der Betreiber der Schaltanlage kann dann rechtzeitig vor diesem Zeitpunkt eine Wartung oder Reparatur der Schaltanlage oder nur von einzelnen Teilen der Schaltanlage durchführen lassen.

Weitere vorteilhafte Ausgestaltungen der Erfindung sind den weiteren Unteransprüchen zu entnehmen.

Anhand der Zeichnungen, in denen Ausführungsbeispiele der Erfindung dargestellt sind, werden die Erfindung, vorteilhafte Ausgestaltungen und Verbesserungen der Erfindung, sowie weitere Vorteile näher erläutert und beschrieben.

Es zeigen:

Fig. 1 einen Signalflussplan für die Aufnahme und Verarbeitung von Messwerten,

Fig. 2 den Verlauf aufgenommener Messwerte für den Druck eines Isoliergases,

Fig. 3 die aus dem Verlauf nach Fig. 2 erzeugten diskrete Messwerte,

Fig. 4 eine lineare Regression der diskreten Messwerte aus Fig. 3 und

Fig. 5 eine lineare Regression ausgewählter diskreter Messwerte aus Fig. 3.

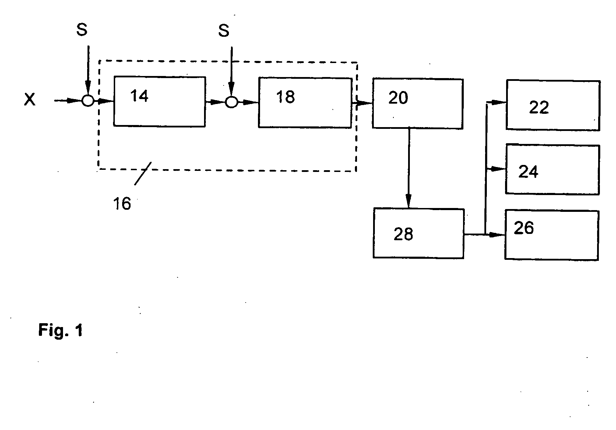

In Fig. 1 ist ein Signalflussplan für die Aufnahme und Verarbeitung von Messwerten dargestellt. Ein Messwertaufnehmer 14 erfasst eine Prozessgröße X, welche von einer Störgröße S überlagert ist. Der Messwertaufnehmer 14 liefert ein elektrisches Signal, welches von einer Zwischenschaltung 18 weiterverarbeitet, insbesondere verstärkt, wird. Das von dem Messwertaufnehmer 14 gelieferte elektrisches Signal ist ebenfalls von einer Störgröße S überlagert. Der Messwertaufnehmer 14 und die Zwischenschaltung 18 bilden zusammen einen Sensor 16.

Die Zwischenschaltung 18 liefert ein verstärktes Ausgangssignal zu einer Übertragungseinheit 20, welche das verstärkte Ausgangssignal beispielsweise per Funk oder über eine Leitung zu einer Recheneinheit 28 überträgt. Die Recheneinheit 28 verarbeitet das von der Übertragungseinheit 20 empfangene verstärkte Ausgangssignal weiter, beispielsweise führt sie eine Digitalisierung durch, und liefert das weiter verarbeitete Ausgangssignal in Form von einzelnen Messwerten an eine Anzeigeeinheit 22, an eine Registrierungseinheit 24 und eine Datenverarbeitungseinheit 26.

Die Anzeigeeinheit 22 ist in diesem Beispiel ein Monitor, an welchem der Verlauf der gemessenen Prozessgröße X grafisch dargestellt wird. Die Anzeigeeinheit 22 kann auch ein Drucker oder ein Plotter sein. Die Registrierungseinheit 24 ist eine Datenbank, in welcher die von der Recheneinheit 28 empfangenen Messwerte abgespeichert werden.

Die Datenverarbeitungseinheit 26 ist ein Digital-Rechner, welcher die von der Recheneinheit 28 empfangenen Messwerte entsprechend dem erfindungsgemäßen Verfahren weiterverarbeitet.

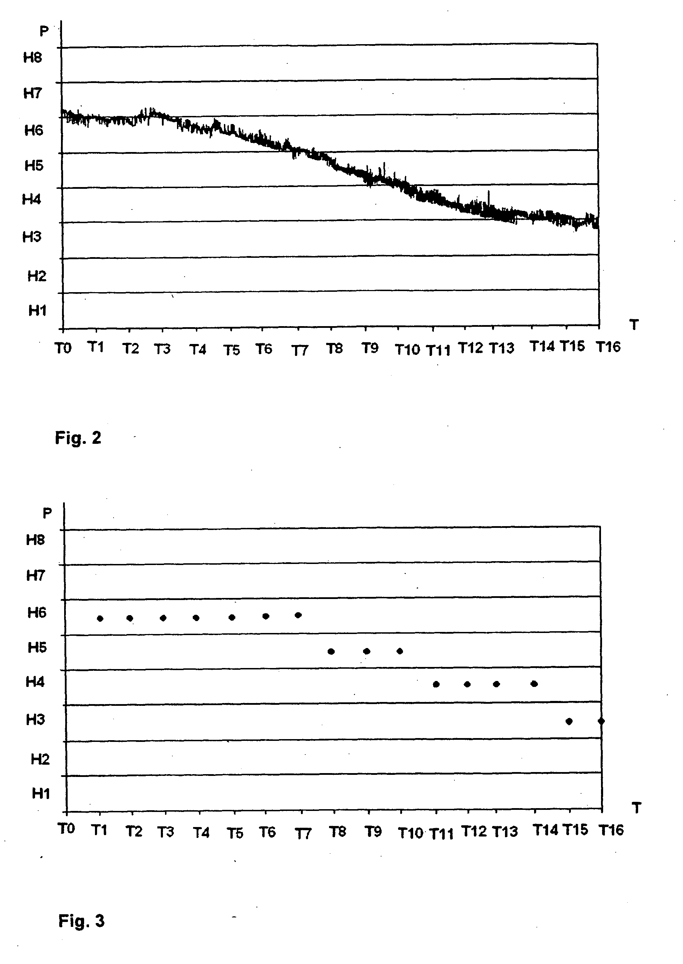

Fig. 2 zeigt ein Diagramm eines Verlaufs von aufgenommenen Messwerten für eine Prozessgröße X am Beispiel eines Drucks P eines Isoliergases in einem Gasraum einer gasisolierten Schaltanlage während einer Zeit T. Es ist jedoch auch denkbar, den Verlauf von anderen Prozessgrößen X, wie beispielsweise eines Füllstandes, einer Temperatur oder einer Feldstärke darzustellen.

Zu vielen vorgegebenen Zeitpunkten wurde je ein Messwert für den Druck P des Isoliergases aufgenommen und in das Diagramm eingetragen. Der Verlauf dieser Messwerte ist als annähernd zeitkontinuierlich und wertekontinuierlich anzusehen.

In den Diagramm sind ferner Gewichtungszeitpunkte T0 bis T16 sowie Toleranzbänder H1 bis H8 dargestellt.

Die Messwerte, welche in dem Auswerteintervall zwischen den Gewichtungszeitpunkten T0 und T1 aufgenommen wurden, werden zu einem gewichteten Messwert zusammengefasst und dem Gewichtungszeitpunkt T1 zugeordnet. Der gewichtete Messwert wird beispielsweise als arithmetisches Mittel der besagten Messwerte berechnet.

Ebenso werden gewichtete Messwerte für die übrigen Gewichtungszeitpunkte T2 bis T16 erzeugt und den jeweiligen Gewichtungszeitpunkten zugeordnet. Der Verlauf der gewichteten Messwerte ist zeitdiskret und wertekontinuierlich.

In diesem Beispiel stellen die Gewichtungszeitpunkte T0 bis T16 die Grenzen der Auswerteintervalle dar. Es ist auch denkbar die Gewichtungszeitpunkte jeweils in der Mitte oder an einer anderen Stelle eines Auswerteintervalls anzuordnen.

Jedem der so erhaltenen gewichteten Messwerte wird anschließend ein diskreter Messwert zugeordnet. Dabei wird allen gewichteten Messwerten, welche in dem gleichen Toleranzband H1 bis H8 liegen der gleiche diskrete Messwert zugeordnet.

In diesem Beispiel liegen die zugeordneten diskreten Messwerte jeweils in der Mitte eines Toleranzbandes. Es ist auch denkbar, andere diskrete Messwerte, welche beispielsweise am Rand des jeweiligen Toleranzbandes liegen, auszuwählen.

Die so erzeugten diskreten Messwerte sind in Fig. 3 dargestellt. Der Verlauf der diskreten Messwerte ist zeitdiskret und wertediskret.

Im gewählten Beispiel sind die Zeitintervalle zwischen den Gewichtungszeitpunkten gleich und betragen jeweils eine Stunde. Auch andere Zeitintervalle, beispielsweise eine Minute, ein Tag oder ein Jahr sind denkbar. Ebenso sind unterschiedlich große Zeitdauern zwischen den Gewichtungszeitpunkten denkbar.

Je kürzer die Zeitintervalle zwischen den Gewichtungszeitpunkten sind, umso genauer wird der Verlauf der diskreten Messwerte. Je größer die Zeitintervalle zwischen den Gewichtungszeitpunkten sind, umso weniger Rechenleistung wird benötigt.

Im gewählten Beispiel haben alle Toleranzbänder H1 bis H8 die gleiche Breite von beispielsweise 100 mbar. Es sind aber auch unterschiedliche Breiten der Toleranzbänder denkbar.

Im gewählten Beispiel grenzt jedes Toleranzband unmittelbar an die jeweils benachbarten Toleranzbänder an. Es ist auch denkbar, dass Toleranzbänder sich überlappen. In diesem Fall wird einem gewichteten Messwert, welcher im Überlappungsbereich von zwei Toleranzbändern liegt, beispielsweise der diskrete Messwert zugeordnet, welcher dem zeitlich vorhergehenden gewichteten Messwert zugeordnet wurde. Das heißt, die Zuordnung der gewichteten Messwerte zu den diskreten Messwerten folgt einer Hysterese.

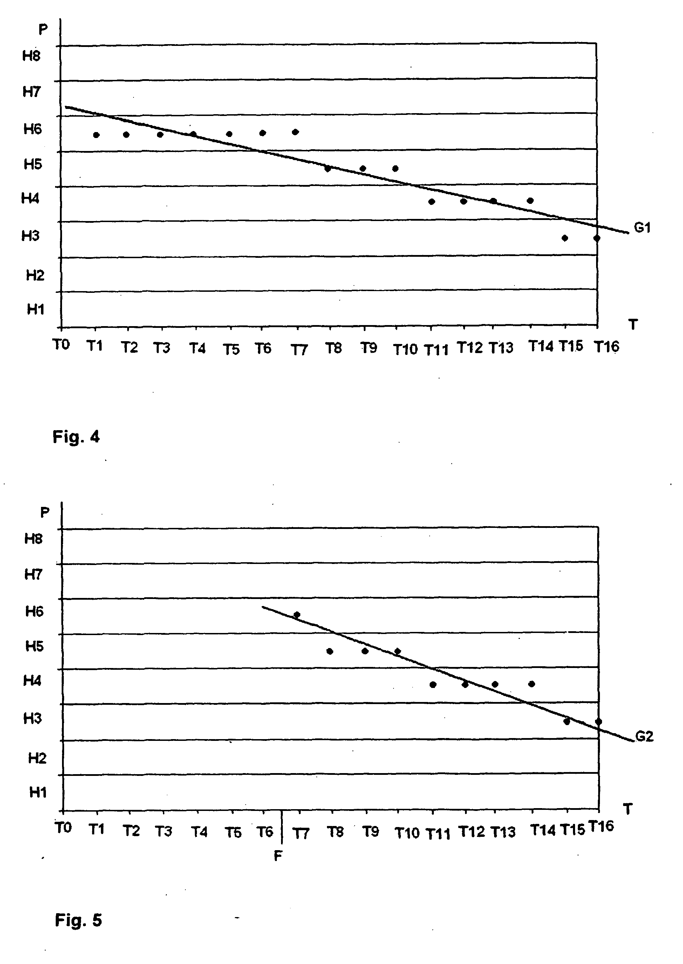

In Fig. 4 ist eine lineare Regression der diskreten Messwerte aus Fig. 3 dargestellt. Anstelle einer linearen Regression sind auch andere Regressionen denkbar und anwendbar, beispielsweise quadratische, exponentielle oder logarithmische Regressionen.

Aus den diskreten Messwerten wird eine Gleichung für eine erste Regressionsgerade G1 berechnet, beispielsweise nach der Methode der kleinsten Fehlerquadrate. Die mathematische Vorgehensweise zur Bestimmung der Parameter für diese Gleichung wird hier nicht näher erläutert und ist dem Fachmann allgemein bekannt.

Die erste Regressionsgerade G1 ist so bestimmt, dass sie den Verlauf der diskreten Messwerte möglichst genau approximiert. Die Steigung der ersten Regressionsgeraden G1 entspricht dabei dem Druckverlust in dem überwachten Gasraum. Aus dem Verlauf der ersten Regressionsgeraden G1 lässt sich somit der zukünftige zeitliche Verlauf des Druckes P vorausschauend ermitteln.

Insbesondere lässt sich abschätzen, zu welchem voraussichtlichen Zeitpunkt TX der Druck P einen vorgebbaren unteren Grenzwert erreicht. Dieser untere Grenzwert wird im Folgenden als Blockierdruck bezeichnet und entspricht dem Druck in dem Gasraum der gasisolierten Schaltanlage, bei welchem ein Betrieb der Schaltanlage nicht mehr möglich ist.

Anhand eines Zahlenbeispiels soll die Berechnung des voraussichtlichen Zeitpunktes TX bis zum Erreichen des Blockierdrucks verdeutlicht werden. Der Gasraum der Schaltanlage sei zu Beginn der Aufnahme der Messwerte mit einem Druck von 7 bar gefüllt. Durch Bestimmung der Regressionsgeraden ergebe sich ein Druckverlust von 35 mbar pro Jahr. Der Blockierdruck betrage 6,2 bar. Somit errechnet sich der voraussichtliche Zeitpunkt TX bis zum Erreichen des Blockierdrucks auf 22,86 Jahre nach Beginn der Aufnahme der Messwerte.

In Fig. 5 ist eine lineare Regression ausgewählter diskreter Messwerte aus Fig. 3 dargestellt. Zur Ermittlung der Gleichung für eine zweite Regressionsgerade G2 werden lediglich die diskreten Messwerte berücksichtigt, welche zeitlich nach einem vorgebbaren Zeitpunkt liegen, welcher im folgenden als Fenstergrenze F bezeichnet wird. Zeitlich vor der Fenstergrenze F liegende Messwerte werden ignoriert.

In diesem Beispiel ist die Fenstergrenze F zwischen den Gewichtungszeitpunkten T6 und T7 festgelegt. Es werden also lediglich die Messwerte, welche den Gewichtungszeitpunkten T7 bis T16 zugeordnet sind, zur Ermittlung der Gleichung für die zweite Regressionsgerade G2 berücksichtigt. Die Gewichtungszeitpunkte T7 bis T16 stellen ein zeitliches Fenster innerhalb der Zeit T dar. In diesem Beispiel hat das zeitliche Fenster eine Breite von zehn Messwerten. Selbstverständlich sind auch andere Fensterbreiten denkbar.

Die Gleichung für die zweite Regressionsgerade G2 wird ebenfalls beispielsweise nach der Methode der kleinsten Fehlerquadrate berechnet, worauf hier nicht näher eingegangen wird. Die Steigung der zweiten Regressionsgeraden G2 entspricht dabei dem Druckverlust in dem überwachten Gasraum

Durch Ignorierung der zeitlich vor der Fenstergrenze F liegenden Messwerte, also der älteren Messwerte, sind kurzfristige Änderungen im Verlauf der Prozessgröße P erkennbar. Wenn beispielsweise eine Dichtung in einem überwachten Gasraum zu einem bestimmten Zeitpunkt porös wird, so erhöht sich der Druckverlust des Gasraums von beispielsweise 35 mbar pro Jahr auf 2.000 mbar pro Jahr. Dieser höhere Druckverlust führt dazu, dass der Blockierdruck deutlich früher erreicht wird, beispielsweise bereits voraussichtlich 0,4 Jahre nachdem die Dichtung porös wurde.

Anstatt ein zeitliches Fenster zur Ermittlung der Gleichung für die zweite Regressionsgerade G2 zu verwenden, sind auch andere Verfahren denkbar, um die Messwerte abhängig vom Zeitpunkt ihrer Aufnahme verschieden stark zu berücksichtigen. So kann beispielsweise vor einem bestimmten Zeitpunkt nur jeder zweite Messwert und vor einem weiteren, weiter zurückliegenden Zeitpunkt nur jeder dritte Messwert berücksichtigt werden.

Beim Betrieb einer gasisolierten Schaltanlage ist es vorteilhaft, die erste Regressionsgerade G1 und die zweite Regressionsgerade G2 regelmäßig zu ermitteln.

Die erste Regressionsgerade G1 verläuft weitgehend konstant und ist gegen kurzfristige Schwankungen, beispielsweise Wechsel zwischen Tages- und Nachttemperatur oder sonstiger Störungen, verhältnismäßig unempfindlich. Die erste Regressionsgerade G1 ist zur Voraussage langfristiger Trends geeignet.

Zur Ermittlung der zweiten Regressionsgeraden G2 werden die neueren Messwerte stärker berücksichtigt als die älteren Messwerte. Kurzfristige Änderungen, beispielsweise wenn eine Dichtung in einem überwachten Gasraum zu einem bestimmten Zeitpunkt porös wird, werden mittels der zweiten Regressionsgeraden G2 verhältnismäßig schnell erkannt. Die zweite Regressionsgerade G2 ist zur Voraussage kurzfristiger Trends geeignet.

Mit Hilfe der Steigungen der ersten Regressionsgeraden G1 sowie der zweiten Regressionsgeraden G2 lässt sich also einerseits ein Zeitpunkt ermitteln, zu welchem der Blockierdruck erreicht ist. Andererseits kann in Kenntnis der Steigungen auch eine Aussage über den Zustand der Schaltanlage getroffen, insbesondere ein Schaden erkannt werden.

Entspricht die Steigung der ersten Regressionsgeraden G1 einem Druckverlust von mehr als 100 mbar pro Jahr, so lässt sich daraus schließen, dass die Schaltanlage bereits bei ihrer Inbetriebnahme Undichtigkeiten aufwies, also nicht korrekt montiert wurde.

Eine Steigung der zweiten Regressionsgeraden G2, welche einem Druckverlust von mehr als 500 mbar pro Jahr entspricht, deutet beispielsweise auf eine poröse Dichtung hin.

Eine weitere Datenreduktion ist erreichbar, indem mehrere diskrete Messwerte von mehreren Gewichtungszeitpunkten zu je einem konzentrierten Messwert zusammengefasst werden.

Bei dem Beispiel nach Fig. 3 können beispielsweise vierundzwanzig diskrete Messwerte, deren Gewichtungszeitpunkte je eine Stunde auseinander liegen, zu einem konzentrierten Tageswert zusammengefasst werden. Weiterhin können achtundzwanzig Tageswerte zu einem konzentrierten Vierwochenwert zusammengefasst werden und dreizehn Vierwochenwerte können zu einem konzentrierten Jahreswert zusammengefasst werden.

Bei einem intakten Gasraum in einer Schaltanlage verändert sich der Gasdruck nur sehr langsam, beispielsweise weniger als 35 mbar pro Jahr. In einem solchen Fall reicht es aus, zur Ermittlung der ersten Regressionsgeraden G1 konzentrierte Jahreswerte zu verwenden.

Vorteilhaft ist es, aus den diskreten Messwerten und aus den konzentrierten Messwerten unabhängig voneinander regelmäßig eine erste Regressionsgerade G1 und/oder eine zweite Regressionsgerade G2 zu ermitteln. Auf diese Art sind sowohl langfristige Trends als auch kurzfristige Trends voraussagbar.

Beispielsweise ist es denkbar, aus den diskreten Messwerten, deren Gewichtungszeitpunkte je eine Stunde auseinander liegen, stündlich eine zweite Regressionsgerade G2 zu ermitteln, wobei zur Ermittlung dieser zweiten Regressionsgeraden G2 die jeweils letzten vierundzwanzig diskreten Messwerte, also die diskreten Messwerte eines Tages, berücksichtigt werden.

Zusätzlich werden beispielsweise die vierundzwanzig diskreten Messwerte jedes Tages zu je einem konzentrierten Tageswert zusammengefasst. Aus allen so erhaltenen konzentrierten Tageswerten wird dann täglich eine erste Regressionsgerade G1 ermittelt. Alternativ oder zusätzlich wird beispielsweise täglich aus den jeweils letzten zwanzig konzentrierten Tageswerten eine zweite Regressionsgerade G2 berechnet.

In ähnlicher Weise können konzentrierte Vierwochenwerte sowie konzentrierte Jahreswerte gebildet und aus diesen erste Regressionsgeraden und/oder zweite Regressionsgeraden ermittelt werden.

Insbesondere ist es sinnvoll, aus diskreten Messwerten, deren Gewichtungszeitpunkte verhältnismäßig nahe beieinander liegen, beispielsweise je eine Stunde, regelmäßig eine zweite Regressionsgerade G2 zu ermitteln, und aus konzentrierten Messwerten, die zeitlich verhältnismäßig weit auseinander liegen, beispielsweise je ein Jahr, regelmäßig eine erste Regressionsgerade G1 zu ermitteln. Auf diese Art sind kurzfristige Trends und langfristige Trends verhältnismäßig gut erkennbar und der Rechenaufwand zur Ermittlung der besagten Regressionsgeraden ist verhältnismäßig gering.

Eine Ermittlung des Zeitpunktes bis zum Erreichen des Blockierdrucks ist nicht beliebig genau durchführbar sondern fehlerbehaftet, da eine Regressionsgerade G1 beziehungsweise G2 lediglich eine Annäherung an die Messwerte darstellt und die Messwerte nicht zwingend genau auf der Regressionsgeraden liegen. Es ist daher sinnvoll, ein Zeitinterwall zu berechnen, innerhalb dem der Blockierdruck wahrscheinlich erreicht wird.

Hierzu wird ein Bestimmtheitsmaß B der Regression berechnet, welches die Güte der Regression beschreibt. Die Güte der Regression wird dabei durch die Abweichungen der Messwerte von der Regressionsgeraden bestimmt. Die mathematische Vorgehensweise zur Bestimmung des Bestimmtheitsmaßes B der Regression wird hier nicht näher erläutert und ist dem Fachmann allgemein bekannt.

Wenn alle Messwerte auf der Regressionsgeraden liegen, so ist die Güte optimal und für das Bestimmtheitsmaß gilt: B = 1. Je kleiner das Bestimmtheitsmaß B ist, umso schlechter ist die Güte der Regression, das heißt, die Messwerte weichen verhältnismäßig stark von der Regressionsgeraden ab.

Zur Berechnung des Zeitinterwalls, innerhalb dem der Blockierdruck wahrscheinlich erreicht sein wird, und welches durch eine untere Grenze TX1 und eine obere Grenze TX2 festgelegt ist, wird ein Wahrscheinlichkeitsmaß W nach folgender Gleichung berechnet: W = 1 - B.

Wenn alle Messwerte auf der Regressionsgeraden liegen, so gilt also für das Wahrscheinlichkeitsmaß: W = 0.

Die untere Grenze TX1 und die obere Grenze TX2 des Zeitinterwalls, innerhalb dem der Blockierdruck wahrscheinlich erreicht sein wird, werden mit Hilfe des voraussichtlichen Zeitpunktes TX bis zum Erreichen des Blockierdrucks und dem Wahrscheinlichkeitsmaß W folgendermaßen berechnet:

$$TX1 = TX(1 - W)$$

$$TX2 = TX(1 + W)$$

Für das Zahlenbeispiel aus Fig. 4 mit einem voraussichtlichen Zeitpunkt bis zum Erreichen des Blockierdrucks von TX = 22,86 Jahren ergibt sich bei einem hier angenommenen Bestimmtheitsmaß von B = 0,995 also beispielsweise die untere Grenze TX1 zu etwa 22,75 Jahren und die obere Grenze TX2 zu etwa 22,97 Jahren.

Das Zeitinterwall, innerhalb dem der Blockierdruck wahrscheinlich erreicht sein wird, hat somit eine Breite, welche als Differenz der oberen Grenze TX2 und der unteren Grenze TX1 zu berechnen ist, von etwa 0,22 Jahren beziehungsweise 80,3 Tagen.

Bezugszeichenliste

| 14 | Messwertaufnehmer |
| 16 | Sensor |
| 18 | Zwischenschaltung |
| 20 | Übertragungseinheit |
| 22 | Anzeigeeinheit |
| 24 | Registrierungseinheit |
| 26 | Datenverarbeitungseinheit |
| 28 | Recheneinheit |
| S | Störgröße |
| X | Prozessgröße |
| P | Druck |
| T | Zeit |
| H1-H8 | Toleranzbänder |
| T0 - T16 | Gewichtungszeitpunkte |
| G1 | erste Regressionsgerade |
| G2 | zweite Regressionsgerade |
| F | Fenstergrenze |
| B | Bestimmtheitsmaß |
| W | Wahrscheinlichkeitsmaß |
| TX | voraussichtlichen Zeitpunkt bis zum Erreichen des Blockierdrucks |
| TX1 | untere Grenze |

TX2     obere Grenze

**Patentansprüche**

1. Verfahren zur vorausschauenden Ermittlung des Blockierdruckes eines Isoliergases in einer gasisolierten Schaltanlage, wobei zu vorgebbaren Zeitpunkten Messwerte für den Druck (P) des Isoliergases in einer gasisolierten Schaltanlage aufgenommen werden und die Messwerte des Druckes (P) des Isoliergases in der gasisolierten Schaltanlage abhängig vom Zeitpunkt ihrer Aufnahme verschieden berücksichtigt werden, wobei zeitlich aufeinander folgende aufgenommene Messwerte zu einem gewichteten Messwert zusammengefasst werden, wobei jedem gewichteten Messwert, welcher in einem vorgebbaren Toleranzband (H1 .. H8) liegt, ein gleicher diskreter Messwert zugeordnet wird, wobei der zukünftige zeitliche Verlauf des Druckes (P) des Isoliergases in der gasisolierten Schaltanlage mittels einer Regression der diskreten Messwerte abgeschätzt wird, und wobei ein Zeitpunkt ermittelt wird, zu welchem der Blokkierdruck erreicht wird, **dadurch gekennzeichnet, dass** eine erste Regressionsgerade (G1) zur Voraussage langfristiger Trends und eine zweite Regressionsgerade (G2) zur Vorhersage kurzfristiger Trends ermittelt wird, wobei mittels deren Steigungen der Zeitpunkt ermittelt wird, zu welchem der Blockierdruck erreicht wird.

2. Verfahren nach Anspruch 1, **dadurch gekennzeichnet, dass** die Regression eine lineare Regression ist.

3. Verfahren nach Anspruch 2, **dadurch gekennzeichnet, dass** die Steigungen der Regressionsgeraden (G1), (G2) dem Druckverlust im überwachten Gasraum der Schaltanlage entsprechen.

4. Verfahren nach einem der vorherigen Ansprüche **dadurch gekennzeichnet, dass** die vorgebbaren Toleranzbänder (H1 ... H8) unterschiedliche Breiten aufweisen und/oder einander überlappen.

5. Verfahren nach einem der Ansprüche 2 bis 4, **dadurch gekennzeichnet, dass** ein Bestimmtheitsmaß (B) der linearen Regression berechnet wird, und dass mit Hilfe des Bestimmtheitsmaßes (B) ein Zeitintervall berechnet wird, innerhalb welchem der Druck (P) des Isoliergases in der gasisolierten Schaltanlage wahrscheinlich einen vorgegebenen Grenzwert erreicht.

6. Verfahren nach einem der vorherigen Ansprüche, **dadurch gekennzeichnet, dass** lediglich die zeitlich nach einem vorgebbaren Zeitpunkt liegenden Messwerte des Druckes (P) des Isoliergases in der gasisolierten Schaltanlage berücksichtigt werden.

7. Verfahren nach einem der Ansprüche 2 bis 6, **dadurch gekennzeichnet, dass** die zweite Regressionsgerade (G2) die neuen Messwerte stärker berücksichtigt als die älteren Messwerte.

**Claims**

1. A method for determining in a predictive manner the blocking pressure of an insulating gas in a gas insulated switchgear, wherein in predeterminable times, measurement values are taken for the insulating gas pressure (P) in a gas insulated switchgear and the measurement values of the insulating gas pressure (P) in the gas insulated switchgear are taken into account in a different manner depending on the time they are taken, wherein measurement values taken successively in time are grouped in a weighted measurement value, a same discrete measurement value being assigned to each weighted measurement value within a predeterminable tolerance range (H1 .. H8)" the temporary future development of the insulating gas pressure (P) in the gas insulated switchgear being estimated by means of a discrete measurement values regression, and a time being determined in which the blocking pressure is reached, **characterised in that** a first regression line (G1) for the prediction of long term trends and a second regression line (G2) for the prediction of short term trends are determined, the time in which the blocking pressure is reached being determined by means of their gradients.

2. The method according to claim 1, **characterised in that** the regression is a linear regression.

3. The method according to claim 2, **characterised in that** the gradients of the regression lines (G1), (G2) correspond to the loss of pressure in the monitored gas chamber of the switchgear.

4. The method according to any one of the preceding claims, **characterised in that** the predeterminable tolerance ranges (H1 - H8) have different amplitudes and/or overlap each other.

5. The method according to any one of claims 2 to 4, **characterised in that** a coefficient of determination (B) of the linear regression is calculated, and **in that** with the help of the coefficient of determination (B) a time interval is calculated, within which the insulating gas pressure (P) in the gas insulated switchgear probably reaches a predetermined limit value.

6. The method according to any one of the preceding claims, **characterised in that** only those measurement values of the insulating gas pressure (P) in the gas insulated switchgear, which are after a predeterminable time, are taken into account.

7. The method according to any one of claims 2 to 6, **characterised in that** the second regression line (G2) takes into account the new measurement values more than the old measurement values.

**Revendications**

1. Procédé pour déterminer de manière prospective la pression de blocage d'un gaz isolant dans une installation de commutation isolée par gaz, dans lequel à des instants que l'on peut prédéterminer, sont prises des valeurs de mesure pour la pression (P) du gaz isolant dans une installation de commutation isolée par gaz et les valeurs de mesure de la pression (P) du gaz isolant dans l'installation de commutation isolée par gaz sont prises en considération de manière différente en fonction de l'instant de leur prise, des valeurs de mesure prises successivement dans le temps étant regroupées dans une valeur de mesure pondérée, où à chaque valeur de mesure pondérée, qui se situe dans un intervalle de tolérance (H1 .. H8) qui peut être déterminé, on attribue une même valeur de mesure discrète, l'évolution temporaire future de la pression (P) du gaz isolant dans l'installation de commutation isolée par gaz étant estimée au moyen d'une régression des valeurs de mesure discrètes, et un instant auquel on atteint la pression de blocage étant déterminé, **caractérisé en ce que** l'on détermine une première ligne de régression (G1) pour la prédiction de tendances a long terme et une deuxième ligne de régression (G2) pour la prédiction de tendances à court terme, l'instant dans lequel on atteint la pression de blocage étant déterminé par le biais de leur pentes.

2. Procédé selon la revendication 1, **caractérisé en ce que** la régression est une régression linéaire.

3. Procédé selon la revendication 2, **caractérisé en ce que** les pentes des lignes de régression (G1), (G2) correspondent à la perte de pression dans la chambre de gaz monitorisée de l'installation de commutation.

4. Procédé selon l'une des revendications précédentes, **caractérisé en ce que** les intervalles de tolérance (H1 - H8) pouvant être prédéterminées présentent différentes amplitudes et/ou se chevauchent entre eux.

5. Procédé selon l'une des revendications 2 à 4, **caractérisé en ce que** l'on calcule un coefficient de détermination (B) de la régression linéaire, et **en ce**

**qu'**avec l'aide du coefficient de détermination (B) on calcule un intervalle de temps, dans lequel il est probable que la pression (P) du gaz isolant dans l'installation de commutation isolée par gaz atteindra une valeur limite prédéterminée.

6. Procédé selon l'une des revendications précédentes, **caractérisé en ce qu'**on ne tient compte que ces valeurs de mesure de la pression (P) du gaz isolant dans l'installation de commutation isolée par gaz, qui sont situés dans le temps après un instant pouvant être déterminé.

7. Procédé selon une des revendications 2 à 6, **caractérisé en ce que** la deuxième ligne de régression (G2) tient davantage en considération les nouvelles valeurs de mesure que les anciennes valeurs de mesure.

**Fig. 1**

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9855904 A
- US 2002077792 A1